# EUROPÄISCHE PATENTSCHRIFT

(11) **EP 4 500 236 B1**
(45) Veröffentlichungstag und Bekanntmachung des Hinweises auf die Patenterteilung: **01.04.2026**
(21) Anmeldenummer: 23744130.8
(22) Anmeldetag: 14.07.2023
(51) Int. Cl.: G01V 8/20

(54) **LICHTGITTER MIT DISTANZMESSUNG**
LIGHT GRID WITH DISTANCE MEASUREMENT
GRILLE LUMINEUSE À MESURE DE DISTANCE

(30) Priorität: 14.07.2022 EP 22185045
(43) Veröffentlichungstag der Anmeldung: 05.02.2025
(73) Patentinhaber: Cedes AG, 7302 Landquart (CH)
(72) Erfinder: ALLMEN, Andri von, 7302 Landquart (CH); ZHANG, Nannan, Changshu, Jiangsu 215500 (CN)
(74) Vertreter: RavensPAT Patentanwälte Partnerschaft mbB
(86) Internationale Anmeldenummer: PCT/EP2023/069696
(87) Internationale Veröffentlichungsnummer: WO 2024/013386

(56) Entgegenhaltungen:
- CN-A- 111 273 371
- DE-A1- 102012 109 985
- US-A1- 2005 133 702
- US-A1- 2011 204 211
- US-A1- 2016 178 794

## Beschreibung

Die Erfindung betrifft ein Lichtgitter zur Objekterkennung.

Aus dem Stand der Technik sind Lichtgitter bekannt, welche eine Senderleiste und eine Empfängerleiste aufweisen und zwischen diesen ein Gitter aus Lichtstrahlen zur Objekterkennung ausbilden. Insbesondere können eine oder beide Leisten des Lichtgitters an der Schiebetüre oder den Schiebetüren einer Aufzugskabine befestigt sein, um den Durchgang eines Objekts durch den geöffneten Türbereich zu detektieren.

Aus der CN 111 273 371 A ist ein Lichtvorhang bekannt, bei dem Sender und Empfänger von einer Kontrolleinheit jeweils so angesteuert werden können, dass die Sender mit unterschiedlichen Intensitäten abstrahlen und die Empfänger unterschiedlich verstärken. Zudem kann die Anzahl gescannter Zeitabschnitte während des Empfangs eingestellt werden. Damit kann die Installation des Lichtvorhangs, gerade bei größeren Entfernungen, verbessert werden, um Ungenauigkeiten bei der Montage und Ungenauigkeiten durch Umgebungslicht zu reduzieren oder zu beseitigen.

Es ist Aufgabe der Erfindung, ein Lichtgitter bereitzustellen, das mit geringem Kostenaufwand eine differenziertere Überwachung ermöglicht.

Diese Aufgabe wird, ausgehend von einem Lichtgitter der eingangs genannten Art, durch ein Lichtgitter nach Anspruch 1 gelöst. Vorteilhafte Ausgestaltungen sind in den weiteren abhängigen Ansprüchen angegeben.

Das erfindungsgemäße Lichtgitter ist ein Lichtgitter zur Bestimmung des Abstandes zwischen Sender- und Empfängerleiste mit einer Senderleiste mit einem oder mehreren Senderelementen, welche Strahlung mit einer bestimmten Intensität aussenden, mit einer Empfängerleiste mit einem oder mehreren Empfängerelementen, welche die Strahlung eines zugeordneten Senderelements empfangen, und mit einer Steuereinrichtung zur Ansteuerung der Senderelemente und/oder der Empfängerelemente und zur Auswertung der Empfängerelemente, wobei jeweils das Senderelement und das Empfängerelement oder jeweils wenigstens eines der Senderelemente und/oder wenigstens eines der Empfängerelemente als qualifizierte Sender- und Empfängerelemente ausgebildet sind, wobei das qualifizierte Senderelement oder die qualifizierten Senderelemente dazu ausgebildet sind, unterschiedliche Intensitätsstufen auszusenden und/oder das qualifizierte Empfängerelement oder die qualifizierten Empfängerelemente dazu ausgebildet sind, unterschiedliche Verstärkungsfaktoren anzuwenden und einen Intensitätswert für die empfangene und verstärkte Strahlung auszugeben, und die Steuereinrichtung dazu ausgebildet ist, unterschiedliche Kombinationen von Intensitätsstufen und Verstärkungsfaktoren der qualifizierten Sender- und/oder Empfängerelemente anzusteuern und einen Abstandswert in Abhängigkeit von der Summe der resultierenden Intensitätswerte der angesteuerten Kombinationen zu ermitteln.

Dies kann den Vorteil ausbilden, dass der Abstand zwischen der Sender- und Empfängerleiste ermittelt werden kann. Gleichzeitig können aber auch dynamische Abläufe sehr gut verfolgt und analysiert werden. Das Gitter wiederum büßt dabei keinerlei Sicherheitsanforderungen ein. Zudem hat sich überraschenderweise herausgestellt, dass das erfindungsgemäße Lichtgitter eine sehr präzise Distanzmessung erlaubt.

Die Senderelemente sind in der Regel entlang einer Senderleiste angeordnet, während in der Empfängerleiste in der Regel die Empfängerelemente entsprechend angeordnet sind. Beide Leisten begrenzen z.B. seitlich den zu überwachenden Raum.

Eine Distanzmessung wird grundsätzlich mit Hilfe der qualifizierten Senderelemente durchgeführt. Bei der Arbeitsweise des Lichtgitters kann ein qualifiziertes Senderelement Strahlung bei mindestens zwei unterschiedlichen Intensitätsstufen ausstrahlen. Denkbar ist zudem, dass von qualifiziertem Senderelement zu qualifiziertem Senderelement unterschiedliche Intensitätsstufen bei der Abstrahlung verwendet werden.

Analog kann auch ein qualifiziertes Empfängerelement unterschiedliche Verstärkungsfaktoren anwenden, mit denen die Intensität bzw. die Intensität des Signals, dass aus der Strahlungsdetektion herrührt, verstärkt wird. Ferner kann der Verstärkungsfaktor grundsätzlich von qualifiziertem Empfängerelement zu qualifiziertem Empfängerelement unterschiedlich sein.

Eine Kombination kann sowohl eine Variation der Intensitätsstufe als auch des Verstärkungsfaktors bedeuten.

Die resultierenden Intensitätswerte werden aufsummiert. Diese Summe von Intensitätswerten kann insbesondere eine bijektive Abbildung zwischen Intensität (hier: der Summe der Intensitäten) und dem Abstandswert darstellen, sodass der resultierenden Summe ein Abstandswert eindeutig zugeordnet werden kann.

Bei einer vorteilhaften Weiterbildung ist aber jedes qualifizierte Empfängerelement einem bestimmten qualifizierten Senderelement zugeordnet, sodass auch z.B. dann, wenn unterschiedliche Senderelemente mit unterschiedlichen Intensitätsstufen abstrahlen, dennoch durch die eindeutige Zuordnung die Steuereinrichtung vorbekannt ist, in welchem Intensitätsbereich die Intensitäten der qualifizierte Empfängerelemente zu erwarten sind. Die Auswertung kann somit vereinfacht werden.

Die Intensitätsstufen können diskrete Intensitätswerte darstellen. Ebenso können die Verstärkungsfaktoren diskrete Verstärkungswerte sein. Auch durch diese Maßnahme kann die Auswertung vereinfacht werden.

Die Kombinationen können grundsätzlich unterschiedliche Intensitätsstufen und Verstärkungsfaktoren für verschiedene Senderelemente in unterschiedlicher Abfolge darstellen. Allerdings können die Summen der Intensitätswerte so gewählt sein, dass eine eindeutige Zuordnung eines Abstandswertes möglich ist. Der Abstandswert kann entsprechend im zu prüfenden Messbereich liegen.

Jede Kombination kann bei einem Ausführungsbeispiel der Erfindung zur Erfassung eines, gegebenenfalls auch nur sehr kleinen, Messbereichs verwendet werden. Die Intensitätswerte lassen vorzugsweise aber bereits in diesem Bereich eine eindeutige Zuordnung eines Abstandswertes zu.

Alle Kombinationen zusammengenommen, also deren jeweilige Messbereiche zusammengenommen können insbesondere einen zusammenhängenden Messbereich lückenlos abbilden. Dadurch kann über diesen zusammenhängenden Messbereich auch eine lückenlose Zuordnung von Intensität zu Summe und somit zum Abstandswert erfolgen.

Bei einer Ausführungsvariante der Erfindung kann die resultierende Intensität eines Empfängerelementes bei kleineren Abstanden als im Messbereich in Sättigung übergehen, und null werden, wenn die Abstände größer sind als der eigentliche Messbereich. Außerhalb des Messbereichs liegen also konstante, aber je nach, ob im Bereich größer oder kleiner des Messbereichs, zueinander unterschiedlich Werte bei dieser Variante vor, sodass bei einer Summenbildung der Intensitäten auch nur der eigentliche Messbereich einen Beitrag zur eindeutigen Zuordnung zwischen Intensität und Abstand liefern kann.

Vorzugsweise weist das Lichtgitter, insbesondere die Sender- und Empfängerleiste noch mindestens ein oder mehrere weitere Sender- und Empfängerelemente auf, die jeweils als einfache Senderelemente und einfache Empfängerelemente ausgebildet sind und welche jeweils als Lichtschranke ausgebildet sind und welche vorzugsweise nicht zu den Kombinationen beitragen und/oder aus denen nicht der Abstandswert ermittelt wird, und/oder welche zu Objektdetektion verwendet werden, und/oder deren einfache Senderelemente mindestens eine Intensitätsstufe aussenden wie die qualifizierten Senderelemente und deren Empfängerelemente mindestens einen Verstärkungsfaktor aufweisen wie die qualifizierten Empfängerelemente.

Dies kann den Vorteil ausbilden, dass das Lichtgitter zur Objektdetektion benutzt werden kann. Dies kann den Vorteil ausbilden, dass nicht alle Sender- und Empfängerelemente qualifiziert ausgebildet sein müssen, womit die Komplexität des Lichtgitters sinkt und Kosten gespart werden können. Ein solches Ausführungsbeispiel der Erfindung ermöglicht aber auch einen Kompromiss zwischen genauer Objekterkennung und einem Kostenvorteil, der dadurch zustande kommt, dass nicht alle Sender- bzw. Empfängerelemente mit den gleichen Funktionen ausgestattet sein müssen, sondern einzelne Elemente auch kostengünstiger mit weniger Funktionen ausgestattet sein können.

Erfindungsgemäß ist die Steuereinrichtung dazu ausgebildet, die Kombinationen nacheinander in einer Sequenz anzusteuern und insbesondere die Sequenz periodisch zu wiederholen und insbesondere die Summe von den angesteuerten Kombinationen einer Sequenz zu ermitteln und insbesondere für jede Sequenz einen Abstandswert zu ermitteln. Vorzugsweise ist die Steuereinrichtung dazu ausgebildet, alle unterschiedlichen Kombinationen von Intensitätsstufen und Verstärkungsfaktoren der qualifizierten Sender- und/oder Empfängerelemente anzusteuern, insbesondere jedoch, ohne die höchste Intensitätsstufe der qualifizierten Senderelemente für die Kombinationen zu verwenden, und/oder diejenigen Intensitätsstufen und Verstärkungsfaktoren der qualifizierten Sender- und Empfängerelemente für die Objekterkennung zu verwenden, welche den Intensitätsstufen und Verstärkungsfaktoren von einfachen (nicht qualifizierten) Sender- und/oder Empfängerelementen entsprechen.

Dies kann die Vorteile ausbilden, dass ein Zeitraum feststeht, nachdem der Abstandswert vorliegt, dass der Abstandswert quasikontinuierlich wiederholt ermittelt wird, dass der Abstandswert dynamisch in zeitlicher Abfolge vorliegt. Dies kann die Vorteile ausbilden, dass die Berechnung des Abstandswertes einfach und schnell erfolgen kann. Dies kann den Vorteil ausbilden, dass eine maximale Auflösung bzw. Genauigkeit für den Abstandswert erreicht wird. Dies kann den Vorteil ausbilden, dass die Anzahl der für die Objekterkennung nötigen Sender- und Empfängerelemente durch die qualifizierten Sender- und Empfängerelemente nicht erhöht werden muss.

Vorzugsweise sind die ein oder mehreren qualifizierten Senderelemente dazu ausgebildet jeweils einzeln mehrere unterschiedliche Intensitätsstufen auszusenden, und/oder zueinander unterschiedliche Intensitätsstufen auszusenden, und/oder jeweils eine gleiche Intensitätsstufe auszusenden, welche insbesondere die höchste Intensitätsstufe ist und insbesondere der Intensitätsstufe der nicht qualifizierten Senderelemente entspricht.

Dies kann den Vorteil ausbilden, dass für verschiedene Abstandsbereiche optimierte Intensitätsstufen zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Senderelemente auch für die Objekterkennung verwendet werden können.

Vorzugsweise sind die ein oder mehreren qualifizierten Empfängerelemente dazu ausgebildet, jeweils einzeln mehrere unterschiedliche Verstärkungsfaktoren anzuwenden, und/oder dieselben unterschiedlichen Verstärkungsfaktoren anzuwenden, und/oder jeweils einen gleichen Verstärkungsfaktor anzuwenden, welche insbesondere die höchste ist, und insbesondere dem Verstärkungsfaktor der nicht qualifizierten, d.h. einfachen Empfängerelemente entspricht.

Dies kann den Vorteil ausbilden, dass für verschiedene Abstandsbereiche optimierte Verstärkungsfaktoren zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Empfängerelemente auch für die Objekterkennung verwendet werden können.

Die qualifizierten Senderelemente senden Strahlung aus, die auch zur Abstandsmessung verwendet wird. Es ist denkbar, dass auch nicht qualifizierte Senderelemente Strahlung unterschiedlicher Intensitätsstufen abstrahlen können. Zudem kann bei qualifizierten und nicht qualifizierten Senderelementen eine Intensitätsstufe zur Abstrahlung übereinstimmend verwendet werden, die hier als Zusatzintensitätsstufe bezeichnet wird. Dies ist insbesondere von Vorteil, wenn für die sicherheitsrelevante Objektdetektion eine bestimmte Intensitätsstufe gefordert ist. Auch die qualifizierten Senderelemente können zur einfachen Objektdetektion eingesetzt werden. Um Verwechslungen zu vermeiden, kann diese Zusatzintensitätsstufe für die Distanzmessung außen vor bleiben. Gleiches gilt analog für die Empfängerelemente.

Vorzugsweise weist das Lichtgitter jeweils drei qualifizierte Sender- und Empfängerelemente und dazu noch weitere einfache Sender- und Empfängerelemente auf, welche nicht zu den Kombinationen beitragen und/oder aus denen nicht der Abstandswert ermittelt wird. Vorzugsweise sind die ein oder mehreren qualifizierten Senderelemente dazu ausgebildet, jeweils drei Intensitätsstufen auszusenden, wobei eine Intensitätsstufe der Intensitätsstufe der nicht qualifizierten, d.h. einfachen Senderelementen gleich ist, welche zur Objekterkennung vorgesehen sind, und wobei zwei Intensitätsstufen niedriger als die eine gleiche sind und sich jeweils von allen anderen Intensitätsstufen unterscheiden. Vorzugsweise sind die ein oder mehreren qualifizierten Empfängerelemente dazu ausgebildet jeweils die gleichen zwei unterschiedlichen Verstärkungsfaktoren anzuwenden, wobei der höhere Verstärkungsfaktor dem Verstärkungsfaktor der nicht qualifizierten, d.h. einfachen Empfängerelementen entspricht, welche zur Objekterkennung vorgesehen sind. Vorzugsweise ist die Steuereinrichtung dazu ausgebildet, zwölf Kombinationen zu bilden aus den drei qualifizierten Sender- und Empfangselementen, den zwei insgesamt unterschiedlichen, niedrigeren Intensitätsstufen der qualifizierten Senderelemente und den zwei unterschiedlichen, jeweils gleichen Verstärkungsfaktoren der Empfängerelemente. Vorzugsweise ist die Steuereinrichtung dazu ausgebildet, diejenigen Intensitätsstufen und Verstärkungsfaktoren der qualifizierten Sender- und Empfängerelemente für die Objekterkennung zu verwenden, welche den Intensitätsstufen und Verstärkungsfaktoren von nicht qualifizierten, d.h. einfachen Sender- und/oder Empfängerelementen entsprechen.

Dies kann den Vorteil ausbilden, dass eine sehr feine Auflösung für den Abstandswert zur Verfügung steht.

Vorzugsweise weist das Lichtgitter eine Sendeeinrichtung auf, die dazu ausgebildet ist, den Abstandswert drahtlos zu versenden.

Dies kann den Vorteil ausbilden, dass das Verhalten der Kabinentür ohne Eingriff in die Steuerung und Elektronik des Aufzugs übertragen und ausgewertet werden kann.

Weitere Merkmale der Erfindung sind in den Zeichnungen angegeben.

Die jeweils genannten Vorteile können sich auch für Merkmalskombinationen realisieren, in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Lichtgitter
- Fig. 2a: Geöffnete Doppelschiebetür einer Aufzugskabine mit Lichtgitter
- Fig. 2b: Halb geöffnete Doppelschiebetür wie Fig. 2a
- Fig. 2c: Geschlossene Doppelschiebetür wie Fig. 2a
- Fig. 3: Diagramm einer Messkurve
- Fig. 4: Diagramm mit allen Messkurven
- Fig. 5: Diagramm des Abstandswertes

### Detaillierte Beschreibung der Zeichnungen:

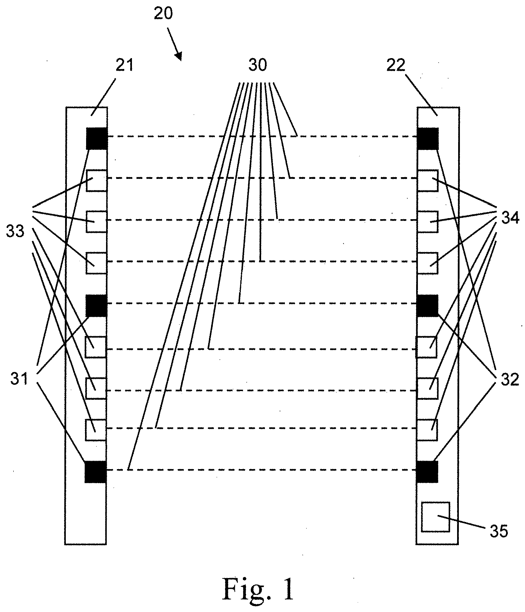

Fig. 1 zeigt ein erfindungsgemässes Lichtgitter 20 mit der Senderleiste 21 und der Empfängerleiste 22. Die Senderleiste 21 weist drei qualifizierte Senderelemente 31 und weitere nicht qualifizierte Senderelemente 33, auf welche IR-Strahlung mit einer bestimmten Intensitätsstufe aussenden können. Die Empfängerleiste 22 weist drei qualifizierte Empfängerelemente 32 und weitere nicht qualifizierte Empfängerelemente 34 auf. Senderleiste und Empfängerleiste sind jeweils senkrecht und zueinander parallel und in gleicher Höhe gegenüberliegend angeordnet. Jedem qualifizierten Senderelement 31 ist in gleicher Höhe ein qualifiziertes Empfängerelement 32 zugeordnet und zusammen bilden diese einen waagrechen Senderstahl 30 aus. Das Lichtgitter 20 weist zudem eine Steuereinrichtung 35 auf.

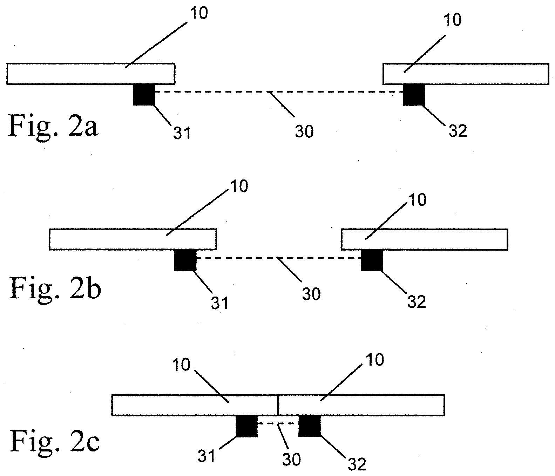

Fig. 2a bis 2c zeigen das Lichtgitter 20 der Fig. 1 an einer Doppelschiebetür 10 einer Aufzugskabine. Die Senderleiste 31 ist an einem Flügel der Doppelschiebetüre befestigt und die Empfängerleiste 32 ist am gegenüberliegenden Flügel der Doppelschiebetür befestigt. Die sonstige Anordnung ist wie in Fig. 1. Senderleiste 31 und Empfängerleiste bewegen sich mit den Doppelschiebetüren mit und bleiben dabei parallel und in gleicher Höhe zueinander angeordnet, sodass die Lichtstrahlen waagrecht und den entsprechenden qualifizierten Sender- und Empfängerelementen zugeordnet verbleiben. Sie verringern ihren Abstand zusammen mit Türen, wenn die Türen sich schliessen, und sie vergrössern ihren Abstand zusammen mit den Türen, wenn die Türen sich öffnen. Der Abstand der Sender- und Empfängerleiste entspricht dem Abstand der beiden Flügel der Doppelschiebetür bis auf einen konstanten Faktor. Fig. 2a zeigt die geöffnete Tür. Fig. 2b zeigt die halb geschlossene Tür. Fig. 2c zeigt die geschlossene Tür.

Die nicht qualifizierten Senderelemente senden mit der Intensitätsstufe Tx:High und die nicht qualifizierten Empfängerelemente weisen die beiden Verstärkungsfaktoren Rx:High und Rx:Low auf. Rx:Low ist niedriger als Rx:High. Die Verstärkungsfaktoren werden gleichzeitig angewendet und getrennt ausgewertet.

Das erste qualifizierte Senderelement T1 kann die Intensitätsstufen T1:Low1, T1:Mid1, oder T1:High senden, das zweite qualifizierte Senderelement T2 kann die Intensitätsstufen T2:Low2, T2:Mid2 oder T3:High senden, und das dritte qualifiziere Senderelement T3 kann die Intensitätsstufen T3:Low3, T3:Mid3 oder T3:High senden. Die Intensitätsstufen Tx:High, T1:High, T2:High und T3:Hight sind gleich gross. Alle anderen Intensitätsstufen sind geringer. Die Abfolge der Stärke der Intensitätsstufen ist aufsteigend: T1:Low1 < T2:Low2 < T3:Low3 < Mid1 < Mid2 < Mid3 < Tx:High. Die drei qualifizierten Empfängerelemente R1, R2, R3 können jeweils die Verstärkungsfaktoren Rx:Low oder Rx:High anwenden.

Die Steuereinrichtung steuert die nicht qualifizierten Sender- und Empfängerelemente so, dass für Distanzen über 1 m Rx:High und für Distanzen unter 1m wird Rx:Low angewendet wird, letzteres, damit Umspiegelung vermieden werden kann.

Die Steuereinrichtung steuert eine Sequenz von Kombinationen verschiedener Intensitätsstufen und Verstärkungsfaktoren und wertet diese zur Gewinnung eines Abstandswertes aus. Die höchste Intensitätsstufe Tx:High wird hierzu nicht verwendet. Die Kombinationen werden jeweils separat angesteuert und ausgewertet. Die Kombinationen sind:
T1:Low1+R1:Low, T1:Mid1+R1:Low, T1:Low1+R1:High, T1:Mid1+R1:High
T2:Low2+R2:Low, T2:Mid2+R2:Low, T2:Low2+R2:High, T2:Mid1+R2:High
T3:Low3+R3:Low, T3:Mid3+R3:Low, T3:Low3+R3:High, T3:Mid1+R2:High

### Dies sind 12 Kombinationen.

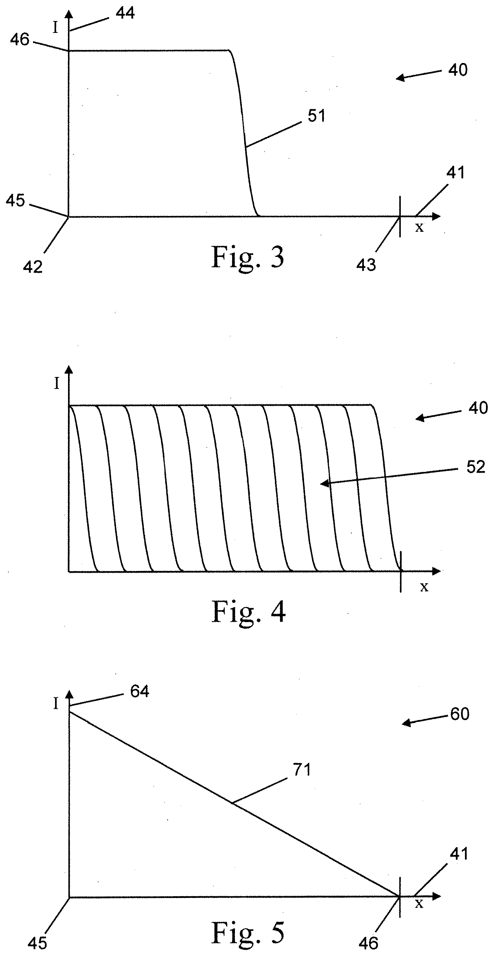

Fig. 3 ist ein Diagramm 40 für die Intensität in Abhängigkeit vom Abstand und zeigt den Messverlauf einer Kombination. Die X-Achse 41 zeigt den Abstand von Senderleiste zu Empfängerleiste. Der Punkt 42 zeigt den minimalen Abstand und der Punkt 43 zeigt dem maximal auswertbaren Abstand. Die Y-Achse 44 zeigt den von einem qualifizierten Empfängerelement ausgegebenen Intensitätswert für eine bestimmte Kombination.

Die Messkurve 51 zeigt beispielhaft eine Kombination mit mittlerer Intensitätsstufe des qualifizieren Senderelementes und mittlerem Verstärkungsfaktor des qualifizierten Empfängerelements. Die Messkurve 51 zeigt bei mittlerer Distanz einen sehr steilen Verlauf und ist bei kürzeren Distanzen in Sättigung und bei weiteren Distanzen ohne Signal. Die Messkurve gibt also nur einen kleinen Distanzbereich in guter Auflösung wieder.

Fig. 4 ist ein Diagramm 40 gemäss Fig. 3 und zeigt eine Überlagerung aller zwölf Messkurven 52 für die zwölf Kombinationen.

Die verschiedenen Intensitätsstufen und der Verstärkungsfaktor Rx:Low sind so gewählt, dass eine weitgehend gleichmässige Abfolge der steilen Verläufe der Messkurven über die Distanz erreicht wird.

Fig. 5 zeigt ein Diagramm für die Summe Intensitätswerte aller zwölf Kombinationen. Die X-Achse ist analog der Fig. 3. Die Y-Achse zeigt die Summe 71 der Intensitätswerte aller zwölf Kombinationen aus Fig. 4. Die Summe zeigt einen weitgehend linearen Verlauf über die gesamte Distanz.

Die Steuereinrichtung addiert die gemessenen und verstärkten Intensitätswerte der zwölf Kombinationen einer Sequenz und gibt einen Abstandswert in Abhängigkeit von der Summe aus. Die Steuereinrichtung wiederholt die Sequenz periodisch und gibt den Abstandswert periodisch aus.

Durch das erfindungsgemässe Lichtgitter kann die Öffnungsbewegung der Kabinentür eines Aufzugs gemessen werden. Ebenso kann der Abstand von beweglichen Begrenzungen eines von einem Lichtvorhang zu überwachenden Durchgangs vom Lichtvorhang selbst gemessen werden.

Das erfindungsgemässe Lichtgitter kann eine Sendereinrichtung aufweisen, welche den Abstandswert drahtlos überträgt, und insbesondere an eine Web Cloud überträgt. Damit stehen die Daten auch für Auswertungen zur Verfügung oder werden für längere Zeit gespeichert, um wie eine Blackbox über Prozessabläufe Auskunft geben zu können. Insbesondere erlaubt dies, eine Aufzugstüre unabhängig von der Aufzugssteuerung zu überwachen.

### Bezugszeichenliste:

- 10: Kabinentür

- 20: Lichtgitter
- 21: Senderleiste
- 22: Empfängerleiste

- 30: Lichtstrahlen
- 31: qualifizierte Senderelemente
- 32: qualifizierte Empfängerelemente
- 33: einfache Senderelemente
- 34: einfache Empfängerelemente
- 35: Steuereinrichtung

- 40: Diagramm der Intensität in Abhängigkeit vom Abstand
- 41: X-Achse: Abstand von Sender- und Empfängerleiste
- 42: Minimalabstand
- 43: Maximalabstand
- 44: Y-Achse: Empfangene und verstärkte Intensität
- 45: Keine Detektion
- 46: Sättigung

- 51: Messkurve für eine Intensität und einen Verstärkungsfaktor
- 52: 12 Messkurven aus 6 Intensitätsstufen und 2 Verstärkungsfaktoren

- 60: Diagramm der Summe der empfangenen 12 Messkurven
- 64: Y-Achse: Summe der verstärkten Intensitäten

- 71: Summe der 12 Messkurven von 6 Intensitätsstufen und 2 Verstärkungsfaktoren

## Patentansprüche

1. Lichtgitter
- zur Objektdetektion und
- zur Bestimmung des Abstandes zwischen Sender- und Empfängerleiste
- mit einer Senderleiste mit mindestens zwei Senderelementen zur Aussendung von Strahlung
- mit einer Empfängerleiste mit mindestens zwei Empfängerelementen zum Empfang von Strahlung von den Senderelementen
- mit einer Steuereinrichtung welche dazu ausgelegt ist, beim Unterbrechen des Empfangs mindestens eines Senderelements ein Signal zur Objektdetektion auszugeben,
wobei
- mindestens eines der Senderelemente
- als qualifiziertes Senderelement ausgebildet ist, wobei ein oder mehrere der qualifizierten Senderelemente dazu ausgelegt sind, Strahlung mit mindestens zwei unterschiedlichen Intensitätsstufen auszusenden,
- mindestens eins der Empfängerelemente
- als qualifiziertes Empfängerelement ausgebildet ist, wobei ein oder mehrere der qualifizierten Empfängerelemente dazu ausgelegt sind, die aus der empfangenen Strahlung resultierende Intensität mit mindestens zwei unterschiedlichen Verstärkungsfaktoren zu verstärken und daraus für jedes qualifizierte Senderelement einen Intensitätswert für die empfangene und verstärkte Intensität zu ermitteln
- **dadurch gekennzeichnet, dass** die Steuereinrichtung dazu ausgebildet ist,
- mindestens zwei Kombinationen von Intensitätsstufen und/oder Verstärkungsfaktoren wenigstens eines der qualifizierten Senderelemente und/oder Empfängerelemente anzusteuern
- und daraus eine Summe aus den resultierenden Intensitätswerten von mindestens zwei der angesteuerten Kombinationen zu ermitteln
- und einen Abstandswert in Abhängigkeit von der Summe auszugeben,
- wobei die Steuereinrichtung dazu ausgebildet ist
- die Kombinationen nacheinander in einer Sequenz anzusteuern
- und die Sequenz periodisch zu wiederholen
- und die Summe von den angesteuerten Kombinationen einer Sequenz zu ermitteln
- und für jede Sequenz einen Abstandswert zu ermitteln.

2. Lichtgitter nach Anspruch 1, **dadurch gekennzeichnet, dass**
- mindestens zwei, oder alle der Sendeelemente als qualifizierte Senderelemente ausgebildet sind.
- mindestens zwei, oder alle der Empfängerelemente als qualifizierte Empfängerelemente ausgebildet sind.

3. Lichtgitter nach einem vorgenannten Anspruch, **dadurch gekennzeichnet, dass**
- jedes qualifizierte Senderelement dazu ausgelegt ist, mindestens zwei unterschiedliche Intensitätsstufen auszusenden und/oder
- mindestens zwei der qualifizierten Senderelemente dazu ausgelegt sind, im Vergleich zueinander mindestens teilweise unterschiedliche Intensitätsstufen auszusenden.

4. Lichtgitter nach einem vorgenannten Anspruch, **dadurch gekennzeichnet, dass**
- jedes qualifizierte Empfängerelement dazu ausgelegt ist, die Intensität der empfangenen Strahlung mit mindestens zwei unterschiedlichen Verstärkungsfaktoren zu verstärken und/oder
- mindestens zwei der qualifizierte Empfängerelemente dazu ausgelegt sind, im Vergleich zueinander die Intensität der empfangenen Strahlung mit mindestens zwei unterschiedlichen Verstärkungsfaktoren zu verstärken.

5. Lichtgitter nach einem vorgenannten Anspruch, **dadurch gekennzeichnet, dass**
- jedes qualifizierte Empfängerelement einem bestimmten qualifizierten Senderelement zugeordnet ist, um dessen Strahlung zu empfangen und zu verstärken.

6. Lichtgitter nach einem vorgenannten Anspruch, **dadurch gekennzeichnet, dass**
- die Intensitätsstufen und/oder Verstärkungsfaktoren aus einer Menge diskreter Werte ausgewählt sind.

7. Lichtgitter nach einem vorgenannten Anspruch, **dadurch gekennzeichnet, dass**
- die Steuereinrichtung dazu ausgebildet ist,
- vorbestimmte und/oder alle Kombinationen zu verwenden.

8. Lichtgitter nach einem vorgenannten Anspruch, **dadurch gekennzeichnet, dass**
- der Abstandswert eindeutig einem Abstand im Messbereich zugeordnet ist.

9. Lichtgitter nach einem vorgenannten Anspruch, **dadurch gekennzeichnet, dass**
- jeder Kombination ein bestimmter und unterschiedlicher Bereich des maximal anwendbaren Abstandswertes zugeordnet ist,
- und die Bereiche einen zusammenhängenden Messbereich für den maximal anwendbaren Abstandswert abdecken,
- wobei Bereich ein Bereich ist, in dem keine Sättigung und/oder kein Signal ausser Rauschen vorliegt.

10. Lichtgitter nach einem vorgenannten Anspruch, **dadurch gekennzeichnet, dass**
- mehrere qualifizierte Senderelemente dazu ausgebildet sind,
- im Vergleich dieser qualifizierten Senderelemente untereinander unterschiedliche Intensitätsstufen auszusenden (A: 1,2,10, B:3,4,10)
- und im Vergleich dieser qualifizierten Senderelemente untereinander zusätzlich eine gleiche Intensitätsstufe als Zusatzintensitätsstufe auszusenden,
- welche höher als die unterschiedlichen Intensitätsstufen ist

11. Lichtgitter nach einem vorgenannten Anspruch, **dadurch gekennzeichnet, dass** die Steuereinrichtung dazu ausgebildet sind,
- die Zusatzintensitätsstufe zur Objektdetektion anzuwenden
- und die Zusatzintensitätsstufe nicht für eine der Kombinationen anzuwenden.

12. Lichtgitter nach einem vorgenannten Anspruch, **dadurch gekennzeichnet, dass**
- die qualifizierten Empfängerelemente dazu ausgebildet sind,
- im Vergleich der qualifizierten Empfängerelemente untereinander dieselben unterschiedlichen Verstärkungsfaktoren anzuwenden

13. Lichtgitter nach einem vorgenannten Anspruch, **dadurch gekennzeichnet, dass**
- nicht qualifizierte Senderelemente vorhanden und dazu ausgebildet sind,
- die gleiche Intensitätsstufe auszusenden wie die Zusatzintensitätsstufe oder die höchste Intensitätsstufe.

14. Lichtgitter nach einem vorgenannten Anspruch, **dadurch gekennzeichnet, dass**
- nicht qualifizierte Empfängerelemente vorhanden und dazu ausgebildet sind,
- dieselben mindestens zwei unterschiedlichen Verstärkungsfaktoren anzuwenden wie die qualifizierten Empfängerelemente.

15. Lichtgitter nach einem vorgenannten Anspruch, **dadurch gekennzeichnet, dass**
- das Lichtgitter
- jeweils drei qualifizierte Sender- und Empfängerelemente und
- mindestens ein nicht qualifiziertes Sender- und Empfängerelemente aufweist,
- die qualifizierten Senderelemente dazu ausgebildet sind,
- jeweils drei unterschiedliche Intensitätsstufen auszusenden,
- wobei eine Intensitätsstufe
- über alle qualifizierten Senderelemente gleich
- und höher als die anderen Intensitätsstufen ist
- und welche der Intensitätsstufe der nicht qualifizierten Senderelementen entspricht
- und wobei die zwei weiteren Intensitätsstufen
- sich im Vergleich der qualifizierten Senderelemente untereinander unterscheiden
- die qualifizierten Empfängerelemente dazu ausgebildet sind,
- jeweils dieselben zwei unterschiedlichen Verstärkungsfaktoren anzuwenden,
- welche den Verstärkungsfaktoren der nicht qualifizierten Empfängerelemente entspricht und
- die Steuereinrichtung dazu ausgebildet ist,
- zwölf Kombinationen zu bilden aus
- den 3 qualifizierten Senderelementen
- mit den jeweils 2 insgesamt unterschiedlichen Intensitätsstufen
- und den 2 verschiedenen Verstärkungsfaktoren
- und die höchste der Intensitätsstufen bei den qualifizierten Senderelementen zur Objekterkennung anzuwenden.

16. Lichtgitter nach einem vorgenannten Anspruch, **dadurch gekennzeichnet, dass**
- das Lichtgitter eine Sendeeinrichtung aufweist, die dazu ausgebildet ist
- den Abstandswert drahtlos zu übermitteln.

## Claims

1. Light grid
- for object detection and
- for determining the distance between the transmitter and receiver strips,
- having a transmitter strip with at least two transmitter elements for emitting radiation,
- having a receiver strip with at least two receiver elements for receiving radiation from the transmitter elements,
- having a control device designed to output a signal for object detection when the reception from at least one transmitter element is interrupted,
wherein
- at least one of the transmitter elements
- is designed as a qualified transmitter element, with one or more of the qualified transmitter elements being designed to emit radiation at at least two different intensity levels,
- at least one of the receiver elements
- is designed as a qualified receiver element, with one or more of the qualified receiver elements being designed to amplify the intensity resulting from the received radiation using at least two different gain settings and use this to determine an intensity value for the received and amplified intensity for each qualified transmitter element,
- **characterized in that** the control device is designed to
- set at least two combinations of intensity levels and/or gain settings in at least one of the qualified transmitter elements and/or receiver elements
- and use this to determine a sum of the resultant intensity values from at least two of the set combinations
- and output a distance value on the basis of the sum,
- wherein the control device is designed to
- set the combinations one after the other in a sequence
- and repeat the sequence periodically
- and determine the sum of the set combinations in a sequence
- and determine a distance value for each sequence.

2. Light grid according to Claim 1, **characterized in that**
- at least two, or all, of the transmitter elements are designed as qualified transmitter elements,
- at least two, or all, of the receiver elements are designed as qualified receiver elements.

3. Light grid according to any preceding claim, **characterized in that**
- each qualified transmitter element is designed to transmit at least two different intensity levels and/or
- at least two of the qualified transmitter elements are designed to transmit intensity levels, at least some of which differ from qualified transmitter element to qualified transmitter element.

4. Light grid according to any preceding claim, **characterized in that**
- each qualified receiver element is designed to amplify the intensity of the received radiation with at least two different gain settings and/or
- at least two of the qualified receiver elements are designed to amplify the intensity of the received radiation with at least two gain settings that differ from qualified receiver element to qualified receiver element.

5. Light grid according to any preceding claim, **characterized in that**
- each qualified receiver element is assigned to a specific qualified transmitter element in order to receive and amplify the radiation from the latter.

6. Light grid according to any preceding claim, **characterized in that**
- the intensity levels and/or gain settings are selected from a set of discrete values.

7. Light grid according to any preceding claim, **characterized in that**
- the control device is designed to
- use predetermined and/or all combinations.

8. Light grid according to any preceding claim, **characterized in that**
- the distance value is uniquely assigned to a distance in the measurement range.

9. Light grid according to any preceding claim, **characterized in that**
- each combination is assigned a specific and different range from the maximum applicable distance value,
- and the ranges cover a continuous measurement range for the maximum applicable distance value,
- wherein a range is a range in which there is no saturation and/or no signal except noise.

10. Light grid according to any preceding claim, **characterized in that**
- multiple qualified transmitter elements are designed to
- emit intensity levels that differ from qualified transmitter element to qualified transmitter element (A: 1, 2, 10, B: 3, 4, 10)
- and additionally emit the same intensity level across all qualified transmitter elements as an additional intensity level
- which is higher than the different intensity levels.

11. Light grid according to any preceding claim, **characterized in that** the control device is designed to
- apply the additional intensity level for object detection
- and not apply the additional intensity level to any of the combinations.

12. Light grid according to any preceding claim, **characterized in that**
- the qualified receiver elements are designed to
- apply the same different gain settings across all qualified receiver elements.

13. Light grid according to any preceding claim, **characterized in that**
- non-qualified transmitter elements are present and designed to
- emit the same intensity level as the additional intensity level or the highest intensity level.

14. Light grid according to any preceding claim, **characterized in that**
- non-qualified receiver elements are present and designed to
- apply the same at least two different gain settings as the qualified receiver elements.

15. Light grid according to any preceding claim, **characterized in that**
- the light grid comprises
- three qualified transmitter elements, three qualified receiver elements and
- at least one non-qualified transmitter element and at least one non-qualified receiver element,
- the qualified transmitter elements are designed to
- each emit three different intensity levels,
- wherein one intensity level
- is the same across all qualified transmitter elements,
- higher than the other intensity levels
- and corresponds to the intensity level of the non-qualified transmitter elements,
- and wherein the two further intensity levels
- differ from qualified transmitter element to qualified transmitter element,
- the qualified receiver elements are designed to
- each apply the same two different gain settings
- which correspond to the gain settings of the non-qualified receiver elements, and
- the control device is designed to
- form twelve combinations from
- the 3 qualified transmitter elements
- with the 2 different intensity levels overall in each case
- and the 2 different gain settings,
- and apply the highest of the intensity levels at the qualified transmitter elements for object detection.

16. Light grid according to any preceding claim, **characterized in that**
- the light grid comprises a transmission device which is designed to
- transmit the distance value wirelessly.

## Revendications

1. Barrière lumineuse
- destinée à la détection d'objets et
- destinée à déterminer la distance entre les barres d'émetteurs et de récepteurs
- comprenant une barre d'émetteurs pourvue d'au moins deux éléments émetteurs destinés à émettre un rayonnement
- comprenant une barre de récepteurs pourvue d'au moins deux éléments récepteurs destinés à recevoir un rayonnement provenant des éléments émetteurs
- comprenant un dispositif de commande, lequel est conçu pour délivrer un signal de détection d'objet lors de l'interruption de la réception d'au moins un élément émetteur,
- au moins l'un des éléments émetteurs
- étant réalisé sous la forme d'un élément d'émetteur qualifié, un ou plusieurs des éléments d'émetteur qualifiés étant conçus pour émettre un rayonnement avec au moins deux niveaux d'intensité différents,
- au moins l'un des éléments récepteurs
- étant réalisé sous la forme d'un élément récepteur qualifié, un ou plusieurs des éléments récepteurs qualifiés étant conçus pour amplifier l'intensité résultant du rayonnement reçu avec au moins deux facteurs d'amplification différents et pour déterminer à partir de là, pour chaque élément émetteur qualifié, une valeur d'intensité pour l'intensité reçue et amplifiée
- **caractérisée en ce que** le dispositif de commande est configuré pour
- commander au moins deux combinaisons de niveaux d'intensité et/ou de facteurs d'amplification d'au moins l'un des éléments émetteurs et/ou des éléments récepteurs qualifiés
- et déduire, à partir de là, une somme des valeurs d'intensité résultantes d'au moins deux des combinaisons commandées
- et délivrer une valeur de distance en fonction de la somme,
- le dispositif de commande étant configuré pour
- commander les combinaisons successivement dans une séquence
- et répéter périodiquement la séquence
- et déterminer la somme des combinaisons commandées d'une séquence
- et déterminer une valeur de distance pour chaque séquence.

2. Barrière lumineuse selon la revendication 1, **caractérisée en ce que**
- au moins deux ou tous les éléments émetteurs sont réalisés sous la forme d'éléments émetteurs qualifiés,
- au moins deux ou tous les éléments récepteurs sont réalisés sous la forme d'éléments récepteurs qualifiés.

3. Barrière lumineuse selon l'une des revendications précédentes, **caractérisée en ce que**
- chaque émetteur qualifié est conçu pour émettre au moins deux niveaux d'intensité différents et/ou
- au moins deux des éléments émetteurs qualifiés sont conçus pour émettre des niveaux d'intensité au moins partiellement différents les uns par rapport aux autres.

4. Barrière lumineuse selon l'une des revendications précédentes, **caractérisée en ce que**
- chaque élément récepteur qualifié est conçu pour amplifier l'intensité du rayonnement reçu avec au moins deux facteurs d'amplification différents et/ou
- au moins deux des éléments récepteurs qualifiés sont conçus pour amplifier, les uns par rapport aux autres, l'intensité du rayonnement reçu avec au moins deux facteurs d'amplification différents.

5. Barrière lumineuse selon l'une des revendications précédentes, **caractérisée en ce que**
- chaque élément récepteur qualifié est associé à un élément émetteur qualifié déterminé en vue de recevoir et d'amplifier son rayonnement.

6. Barrière lumineuse selon l'une des revendications précédentes, **caractérisée en ce que**
- les niveaux d'intensité et/ou les facteurs d'amplification sont sélectionnés à partir d'un ensemble de valeurs discrètes.

7. Barrière lumineuse selon l'une des revendications précédentes, **caractérisée en ce que**
- le dispositif de commande est configuré pour
- utiliser des combinaisons prédéfinies et/ou toutes les combinaisons.

8. Barrière lumineuse selon l'une des revendications précédentes, **caractérisée en ce que**
- la valeur de distance est clairement associée à une distance dans la plage de mesure.

9. Barrière lumineuse selon l'une des revendications précédentes, **caractérisée en ce que**
- chaque combinaison est associée à une plage déterminée et différente de la distance maximale utilisable,
- et les plages couvrent une plage de mesure cohérente pour la distance maximale utilisable,
- la plage étant une plage où il n'existe pas de saturation et/ou de signal autre que le bruit.

10. Barrière lumineuse selon l'une des revendications précédentes, **caractérisée en ce que**
- plusieurs éléments émetteurs qualifiés étant configurés pour
- émettre des niveaux d'intensité différents en comparaison de ces éléments émetteurs qualifiés entre eux (A: 1, 2, 10, B:3,4,10)
- et, en comparaison de ces éléments émetteurs qualifiés entre eux, émettre en plus un niveau d'intensité égal en tant que niveau d'intensité supplémentaire,
- lequel est plus élevé que les niveaux d'intensité différents.

11. Barrière lumineuse selon l'une des revendications précédentes, **caractérisée en ce que** le dispositif de commande est configuré pour
- utiliser le niveau d'intensité supplémentaire pour la détection d'objet
- et ne pas utiliser le niveau d'intensité supplémentaire pour l'une des combinaisons.

12. Barrière lumineuse selon l'une des revendications précédentes, **caractérisée en ce que**
- les éléments récepteurs qualifiés sont configurés pour
- utiliser les mêmes facteurs d'amplification différents en comparaison des éléments récepteurs qualifiés entre eux.

13. Barrière lumineuse selon l'une des revendications précédentes, **caractérisée en ce que**
- des éléments émetteurs non qualifiés sont présents et configurés pour
- émettre le même niveau d'intensité que le niveau d'intensité supplémentaire ou le niveau d'intensité le plus élevé.

14. Barrière lumineuse selon l'une des revendications précédentes, **caractérisée en ce que**
- des éléments récepteurs non qualifiés sont présents et configurés pour
- utiliser les mêmes au moins deux facteurs d'amplification différents que les éléments récepteurs qualifiés.

15. Barrière lumineuse selon l'une des revendications précédentes, **caractérisée en ce que**
- la barrière lumineuse possède
- respectivement trois éléments émetteurs et récepteurs qualifiés et
- au moins un élément émetteur et un récepteur non qualifié,
- les éléments émetteurs qualifiés sont configurés pour
- émettre respectivement trois niveaux d'intensité différents,
- un niveau d'intensité
- étant identique sur tous les éléments émetteurs qualifiés
- et supérieur aux autres niveaux d'intensité
- et correspondant au niveau d'intensité des éléments émetteurs non qualifiés
- et les deux niveaux d'intensité supplémentaires
- se différenciant entre eux en comparaison des éléments émetteurs qualifiés
- les éléments récepteurs qualifiés sont configurés pour
- utiliser respectivement les mêmes deux facteurs d'amplification différents,
- qui correspondent aux facteurs d'amplification des éléments récepteurs non qualifiés et
- le dispositif de commande est configuré pour
- former douze combinaisons constituées
- des 3 éléments émetteurs qualifiés
- avec respectivement les 2 niveaux d'intensité différents au total
- et les 2 facteurs d'amplification différents
- et utiliser le niveau d'intensité le plus élevé pour les éléments émetteurs qualifiés pour la reconnaissance d'objet.

16. Barrière lumineuse selon l'une des revendications précédentes, **caractérisée en ce que**
- la barrière lumineuse possède un dispositif d'émission qui est configuré pour
- émettre la valeur de distance sans fil.
